# EUROPÄISCHE PATENTSCHRIFT

(11) **EP 0 410 518 B1**
(45) Veröffentlichungstag und Bekanntmachung des Hinweises auf die Patenterteilung: **30.11.1994**
(21) Anmeldenummer: 90201971.0
(22) Anmeldetag: 20.07.1990
(51) Int. Cl.: G11B 7/08, G11B 7/09

(54) **Spulenanordnung für einen optischen Abtaster und mit einer solchen Spulenanordnung versehener optischer Abtaster**
Coil arrangement for an optical head, and an optical head with such a coil arrangement
Bobine pour tête optique et tête optique fournie d'une telle bobine

(30) Priorität: 26.07.1989 AT 1809/89
(43) Veröffentlichungstag der Anmeldung: 30.01.1991
(73) Patentinhaber: Philips Electronics N.V., 5621 BA Eindhoven (NL)
(72) Erfinder: Heinrich, Norbert, NL-5656 AA Eindhoven (NL)
(74) Vertreter: Schrijnemaekers, Hubert Joannes Maria

(56) Entgegenhaltungen:
- EP-A- 0 068 757
- PATENT ABSTRACTS OF JAPAN vol. 10, no. 256 (P-493)(2312)2. September 1986 & JP-A-61 082 340 ( OLYMPUS OPTICAL CO ) 25. April 1986

## Beschreibung

Die Erfindung betrifft eine Spulenanordnung für einen optischen Abtaster, die eine trägerlos gewickelte erste Spule aufweist, an der umgangsseitig mindestens eine weitere Spule angebracht ist, deren Achse debei im wesentlichen senkrecht zum Umfang der ersten Spule verläuft.

Optische Abtaster werden zur Abtastung einer Informationsspur auf einem optischen Aufzeichnungsträger verwendet, wobei ihr Linsensystem einerseits auf eine Informationsspur fokussiert und andererseits in Richtung quer zur Informationsspur auf die Spurmitte eingestellt wird, wozu einerseits eine Abstandseinstellung des Linsensystems gegenüber dem optischen Aufzeichnungsträger und andererseits eine Verstellbewegung des Linsensystems in Richtung quer zur Informationsspur erforderlich ist. Demgemäss wird das Linsensystem eines solchen optischen Abtasters auf einem verstellbaren Träger angeordnet, der die beiden vorgenannten Bewegungen ausführen kann. Zur Erzeugung solcher Bewegungen dient eine Spulenanordnung, die mit einem Magnetsystem zusammenwirkt, wobei der Spulenanordnung elektrische Steuersignale zugeführt werden, wodurch Relativbewegungen zwischen der Spulenanordnung und dem Magnetsystem bewirkt und diese dann auf den Träger des Linsensystems übertragen werden.

Eine Spulenanordnung der eingangs angeführten Gattung, wie sie beispielsweise von einem in der DE-OS 38 31 425 beschriebenen optischen Abtaster her bekannt ist, weist hiezu eine im Querschnitt senkrecht zu ihrer Spulenachse rechteckig ausgebildete, trägerlos gewickelte erste Spule auf, an der auf einer ihrer längeren Umfangsseiten zwei flach ausgebildete, ebenfalls trägerlos gewickelte, weitere Spulen angebracht sind, was in der Praxis durch einen Klebevorgang geschieht. Die Herstellung einer solchen Spulenanordnung ist relativ kompliziert und sehr heikel, da die zur Anwendung gelangenden Spulen aus einem sehr dünnen Draht gewickelt werden und relativ klein sind, wobei ausserdem noch ein Klebevorgang erforderlich ist, der bekanntlich, insbesondere in einer Massenfertigung, vielfach Schwierigkeiten mit sich bringt. Ausserdem ist die Stabilität einer solchen Spulenanordnung relativ gering, da die zur Anwendung gelangenden Spulen trägerlos gewickelt sind, wodurch sich im Zuge der Herstellung eines optischen Abtasters, an den besondere Genauigkeitsanforderungen gestellt werden, ebenfalls Schwierigkeiten ergeben können.

Die Erfindung hat sich zum Ziel gesetzt, eine Spulenanordnung der eingangs angeführten Gattung so auszubilden, dass die vorgenannten Schwierigleiten vermieden sind, dahingehend, dass die Spulenanaordnung einen stabilen Aufbau aufweist und kein Klebevorgang erforderlich ist. Erfindungsgemäss ist hiezu vorgesehen, dass die trägerlos gewickelte erste Spule umfangsseitig mit einem Kunststoffmantel umspritzt ist und dass im Kunststoffmantel, gegenüber der ersten Spule aussen liegend, mindestens eine mindestens abschnittsweise in ihrem Querschnitt rinnenförmig ausgebildete Spulenkammer ausgeformt ist, in der die weitere Spule untergebracht ist. Auf diese Weise ist erreicht, dass durch das Vorsehen eines Kunstoffmantels für die erste Spule, an dem eine rinnenförmig ausgebildete Spulenkammer für die weitere Spule ausgeformt ist, sowohl der ersten Spule als auch der weiteren Spule eine gute Stabilität verliehen wird, wobei für die Anbringung der weiteren Spule an der ersten Spule keine zusätzlichen Massnahmen, wie ein Klebevorgang oder dergleichen, erforderlich sind, da diese weitere Spule unmittelbar in die für sie vorgesehene Spulenkammer gewickelt werden kann. Wie ersichtlich, gestaltet sich die Herstellung einer solchen Spulenanordnung sehr einfach und sicher, wobei eine solche Spulenanordnung auch sehr gut für eine Massenfertigung geeignet ist. Weiters ist auch einer Gefahr der Beschädigung der Spulenanordnung im Zuge ihrer weiteren Verwendung weitgehendst vorgebeugt.
als besonders vorteilhaft hat sich hiebei erwiesen, wenn die erste Spule als Zylinderspule und die weitere Spule als Sattelspule ausgebildet ist. Auf diese Weise wird eine sehr kompakte Spulenanordnung erhalten, die er ermöglicht, ein mit ihr zusammenwirkendes Magnetsystem mit einem relativ kleinen Luftspalt auszuführen, da die erste Spule zylindrisch ausgeführt und die weitere Spule, zufolge ihrer Ausbildung als Sattelspule, dem zylindrischen Umfang der ersten Spule angepasst ist. Eine solche Spulenanordnung ergibt daher einen guten Wirkungsgrad im Zusammenwirken mit einem Magnetsystem.

Beispielsweise könnte die Spulenkammer für die als Sattelspule ausgebildete weitere Spule so ausgebildet sein, dass sie rundum von einer parallel zur als Zylinderspule ausgebildeten ersten Spule verlaufenden äusseren Wand des Kunststoffmantels begrenzt wird und beispielsweise dabei eine in sich geschlossene ovale rinnenförmige Form aufweist. Als besonders vorteilhaft hat sich aber erwiesen, wenn die Spulenkammer für die als Sattelspule ausgebildete weitere Spule zwei parallel zur Achse der als Zylinderspule ausgebildeten ersten Spule verlaufenden gerade rinnenförmige Abschnitte aufweist, die durch in ihrem Querschnitt sekantenförmig zur Zylinderspule verlaufende Rinnen gebildet sind. Hiedurch ist der Kunststoffmantel zusammen mit der an ihm ausgeformten Spulenkammer werkzeugmässig hinsichtlich der Entformbarkeit besonders einfach herzustellen und die weitere Spule einfach zu wickeln.

Weiters betrifft die Erfindung die Verwendung einer erfindungsgemäss ausgebildeten Spulenanordnung in einem optischen Abtaster zur Abtastung einer Informationsspur auf einem optischen Aufzeichnungsträger. Ein eine erfindungsgemäss ausgebildete Spulenanordnung verwendender optischer Abtaster hat sich in der Fertigung, insbesondere einer Massenfertigung, als einfach und sehr zuverlässlich erwiesen, da die Spulenanordnung einen stabilen Aufbau aufweist und demzufolge insbesondere gegen Beschädigungen unanfällig ist. Ein solcher optischer Abtaster weist auch sehr gute Einstelliegenschaften auf eine Informationsspur auf, da die Spulenanordnung kompakt aufbaubar ist und daher mit guten Wirkungsgrad mit einem Magnetsystem zusammenwirken kann.

Die Erfindung wird im folgenden anhand der Zeichnung, in der ein Ausführungsbeispiel der Erfindung dargestellt ist, auf das sie jedoch nicht beschränkt sein soll, näher erläutert.

Fig. 1 zeigt in axonometrischer Darstellung eine Spulenanordnung, bei der eine erste Spule als Zylinderspule ausgebildet ist und zwei weitere Spulen, von welcher in der Darstellungsweise von Fig. 1 nur eine unmittelbar sichtbar ist, als Sattelspulen ausgebildet sind, wobei der Ubersichtlichkeit halber die Spulen an sich nur schematisch durch punktierte Linien angedeutet und unsichtbare Kanten nur bei einer Spulenkammer gezeichnet sind.

Fig. 2 zeigt einen Teilschnitt nach der Linie II-II in Fig. 1.

Fig. 3 zeigt in einer Explosionsdarstellung einen optischen Abtaster, der eine Spulenanordnung nach den Figuren 1 und 2 verwendet.

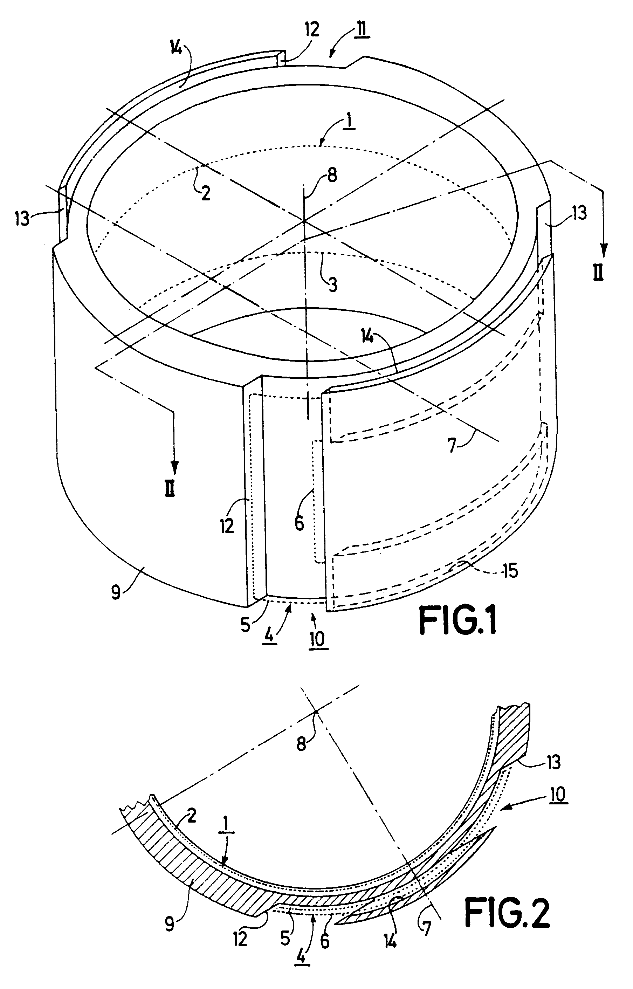

In den Figuren 1 und 2 ist eine Spulenanordnung für einen hier nicht näher dargestellten optischen Abtaster gezeigt, der zur Abtastung einer Informationsspur auf einem optischen Aufzeichnungsträger, wie beispielsweise einer sogenannten Compact Disc, dient, wobei sein auf einem verstellbaren Träger angeordnetes Linsensystem mittels der hier in Rede stehenden, mit einem Magnetsystem zusammenwirkenden Spulenanordnung sowohl auf eine Informationsspur fokussiert als auch auf deren Spurmitte eingestellt wird. Im vorliegenden Fall besteht die Spulenanordnung aus einer ersten Spule 1, die als Zylinderspule ausgebildet und durch die punktierten Linien 2 und 3 schematisch angedeutet ist, und aus zwei umfangsseitig gegen über der ersten Spule 1 einander diametral gegenüberliegenden weiteren Spulen 4, die hier als Sattelspulen ausgebildet sind, von welchen in der Darstellungsweise von Fig. 1 nur eine unmittelbar sichtbar und durch die punktierten Linien 5 und 6 schematisch angedeutet ist, wobei die den beiden weiteren Spule 4 gemeinsame Achse 7 im wesentlichen senkrecht zum Umfang und zur Achse 8 der ersten Spule 1 verläuft.

Der Aufbau der Spulenanordnung ist weiters so getroffen, dass die erste Spule 1 in üblicher Weise trägerlos auf einem Wickeldorn gewickelt und anschliessend umfangsseitig mit einem Kunststoffmantel 9 umpritzt ist, wodurch sie besondere Stabilität erhält. In diesem Kunststoffmantel 9 sind nun unmittelbar zwei gegenüber der ersten Spule 1 aussen liegende und einander diametral gegenüberliegende, in ihrem Querschnitt rinnenförmig ausgebildete Spulenkammers 10 und 11 ausgeformt, in welcehn die beiden weiteren Spulen 4 untergebracht und damit gleichzeitig mit der ersten Spule 1 umfangsseitig vereinigt werden, was einfach dadurch geschieht, dass sie in diese Spulenkammern hinein gewickelt werden. Im vorliegenden Fall besteht dabei jede Spulenkammer 10 beziehungsweise 11 aus zwei parallel zur Achse 8 der ersten Spule 1 verlaufenden geraden rinnenförmigen Abschnitten 12 und 13 aus zwei bogenförmigen rinnenförmigen Abschnitten 14 und 15, welche konzentrisch zur ersten Spule 1 verlauenden und jeweils die beiden Enden der Abschnitte 12 und 13 miteinander verbinden. Auf die Weise werden in sich geschlossene, einseitig offene rinnenförmige Spulenkammern 10 beziehungsweise 11 erhalten, die eine Sattelform aufweisen, in welche dann die weiteren Spulen 4 gewickelt werden, die auf diese Weise als Sattelspulen ausgebildet sind. Weiters sind im vorliegenden Fall die parallel zur Achse 8 der ersten Spule 1 verlaufenden beiden geraden rinnenförmigen Abschnitte 12 und 13 jeder Spulenkammer 10 beziehungsweise 11, wie insbesondere aus Fig. 2 ersichtlich ist, durch in ihrem Quershnitt sekantenförmig zur als Zylinderspule ausgebildeten ersten Spule 1 verlaufende Rinnen gebildet, was dadurch erreicht wird, dass die seitlichen Wandflächen der Rinnen Sekanten zum Umfangskreis der ersten Spule 1 beziehungsweise des Kunststoffmantels 9 bilden, wobei dann die rinnenförmigen Abschnitte 12 und 13 zum Umfang des Kunststoffmantels 9 hin vollständig offen sind. Auf diese Weise ist der die Spulenkammer 10 und 11 und die Ummantelung für die als Zylinderspule ausgebildete erste Spule 1 bildende Kunststoffmantel 9 werkzeugmässig im Hinblick auf die Entformbarkeit besonders einfach herzustellen und sind weiters die in den Spulenkammers 10 beziehungsweise 11 unterzubringenden weiteren Spulen 4 einfach zu wickeln. Ar sich wäre es natürlich auch möglich, die rinnenförmigen Abschnitte 12 und 13 teilweise mit äussenren bogenförmigen Wandabschnitten des Kunststoffmantels 9 zu begrenzen, dies anschliessend an die äusseren Wandabschnitte, welche die bogenförmigen rinnenförmigen Abschnitte 14 und 15 begrensen. Eine andere Möglichkeit wäre beispielsweise, falls es das mit der Spulenanordnung zusammenwirkende Magnetsystem gestattet, zumindest einen der beiden rinnenförmigen Abschnitte 14 beziehungsweise 15 nicht bogenförmig, sondern ebenfalls gerade und sekantenförmig zur als Zylinderspule ausgebildeten ersten Spule 1 verlaufend auszubilden, dies unmittelbar anschliessend an die geraden rinnenförmigen Abschnitte 12 und 13, wobei dann ein Teil der in diesem Abschnitt unterzubringenden Wicklung der weiteren Spule 4 freitragend verlaufen würde.

Die Spulenanordnung nach dem vorliegenden Ausführungsbeispiel weist somit zufolge des vorgesehenen Kunststoffmantels 9 eine sehr gute Stabilität auf und ist auch gegen Beschädigungen unanfällig. Dadurch, dass unmittelbar im Kunststoffmantel Spulenkammern für die weiteren Spulen ausgeformt sind, ist kein weiterer Vorgang zum umfangsseitigen Anbringen der weiteren Spulen an der ersten Spule, wie beispielsweise ein Klebevorgang, erforderlich, da die weiteren Spulen unmittelbar in die für sie vorgesehenen Spulenkammern gewickelt werden können. Weiters ist dadurch, dass die erste Spule als Zylinderspule ausgebildet ist und die beiden weiteren Spulen als Sattelspulen ausgebildet sind, eine sehr kompakte Bauform erreicht, die eine sehr gute Ausnutzung des Luftspaltes des mit der Spulenanordnung zusammenwirkenden Magnetsystems gestattet. Eine solche Spulenanordnung ist daher sehr gut geeignet zur Verwendung in einem optischen Abtaster zur Abtastung einer Informationsspur auf einem optischen Aufzeichnungsträger, wobei beispielsweise die mit einem verstellbaren Träger für ein Linsensystem verbundene Spulenanordnung im Luftspalt eines Magnetsystems verläuft und mit der ersten Spule eine Fokussierung des Linsensystems auf die Informationsspur und mit den beiden weiteren Spulen eine Einstellung des Linsensystems auf die Spurmitte erfolgt. Auf diese Weise werden gute Einstelleigenschaften des optischen Abtasters auf eine Informationsspur erhalten, wobei der optische Abtaster selbst von seinem Aufbau her einfach und betriebssicher sowie gut zu fertigen ist.

Selbstverständlich sind die im Vorstehenden beschriebenen Massnahmen nicht auf die Anwendung bei einer als Zylinderspule ausgebildeten ersten Spule beschränkt, sondern beispielsweise auch bei einer im Querschnitt senkrecht zu ihrer Spulenachse rechteckig ausgebildeten, trägerlos gewickelten ersten Spule anwendbar. Entsprechendes gilt auch für die Ausbildung der weiteren Spule beziehungsweise der Ausbildung der im Kunststoffmantel ausgeformten Spulenkammer, in der eine weitere Spule untergebracht wird. Beispielsweise könnte eine solche Spulenkammer auch so ausgebildet sein, dass sie die in ihr unterzubringende Spule nur abschnittsweise an einigen Stellen teilweise umgreift beziehungsweise unterstützt, dies nach Art einer speichenförmigen Haspel. Wie ersichtlich, besteht somit eine Reihe von Abwandlungsmöglichkeiten des im Vorstehenden beschriebenen Ausführungsbeispieles, ohne dass dabei der Rahmen der Erfindung verlassen wird.

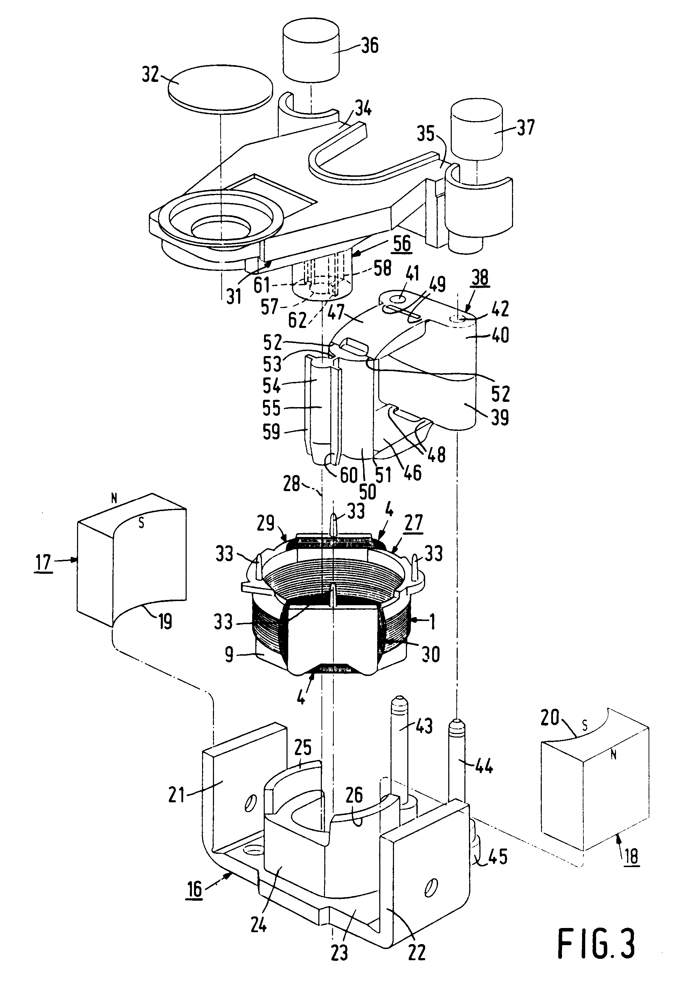

Der in Fig. 3 gezeigte optische Abtaster weist einen aus weichmagnetischem Material bestehenden U-förmigen Bügel 16 auf, der als Träger für das Magnetsystem dient. Im vorliegenden Fall besteht das Magnetsystem aus zwei quaderförmigen Magneten 17 und 18, die zylindrisch geformte Polflächen 19 und 20 aufweisen. Diese Magnete 17 und 18 werden mit ihren Polflächen 19 und 20 einander zugewandt, je auf einem der beiden Schenkel 21 und 22 des U-förmigen Bügels 16 montiert, wobei die Magnete in der Richtung des Verlaufes des Steges 23 des U-förmigen Bügels 16 magnetisiert und gleichnamige Pole der beiden Magnete einander zugewandt sind. Zwischen den Magneten 17 und 18 ist am Steg 23 des U-förmigen Bügels 16 ein ebenfalls aus weichmagnetischem Material bestehender hohlzylinderförmig ausgebildeter Rückschlussteil 24 für das Magnetsystem angebracht, der Abschnitte mit zylindrischen Mantelflächen 25 und 26 aufweist, die mit Abstand gegenüber den Polflächen 19 und 20 der Magnete 17 und 18 liegen, wodurch ein Luftspalt gebildet ist, der von den Kraftlinien der Magnete 17 und 18 durchsetzt wird. In diesen Luftspalt des Magnetsystems taucht im montierten Zustand des optischen Abtasters die nach dem Ausführungsbeispiel der Figuren 1 und 2 ausgebildete Spulenanordnung 27 ein, die aus einer Zylinderspule 1 und zwei weiteren als Sattelspulen ausgebildeten Spulen 4 besteht, die einander diametral gegenüberliegen, wobei je einer der beiden parallel zur Achse 28 der Spulenanordnung 27 verlaufenden Stränge 29 beziehungsweise 30 der beiden Spulen 4 unmittelbar einem Pol der Magnete 17 beziehungsweise 18 gegenüber liegt, wodurch bei einem Stromfluss durch die Spulen 4 ein Drehmoment auf die Spulenanordnung 27 ausgeübt und diese damit verdreht wird. In analoger Weise wird die Spulenanordnung 27 bei einem Stromfluss durch die Zylinderspule 1 in Richtung der Achse 28 der Spulenanordnung 27 verstellt.

Die Spulenanordnung 27 wird ihrerseits mit einem in spezieller Weise verstellbaren plattenförmigen Träger 31 für das hier aus einer Linse 32 bestehende Linsensystem des optischen Abtasters verbunden, was im vorliegenden Fall einfach dadurch geschieht, dass am Kunststoffmantel 9 der Spulenanordnung 27 winkelversetzt vier in Richtung der Achse 28 der Spulenanordnung 27 verlaufende Stifte 33 angespritzt sind, die in hier nicht sichtbare korrespondierende Bohrungen am Träger 31 eingesetzt und dann mit Ultraschall mit dem Träger 31 verschweisst werden. Um das Gewicht der gegenüber der Achse 28 der Apulenanordnung 27 auskragenden Linse 32 auszugleichen, sind an zwei vom Träger 31 in entgegengesetzter Richtung zur Linse 32 auskragenden Armen 34 und 35 zwei hier zylinderförmig ausgebildete Gegengewichte 36 und 37 angebracht, wodurch bezüglich einer Quer zur Achse 28 der Spulenanordnung 27 und parallel zu einer senkrechten auf die Pole der beiden Magnete 17 und 18 verlaufenden Achse durch den Träger 31 auf diesen kein Kippmoment ausgeübt wird.

Zur Einstellung des durch die Linse 29 gebildeten Linsensystems des optischen Abtasters auf einen optischen Aufzeichnungsträger muss der Träger 31 zwei Bewegungen ausführen können, nämlich einerseits eine Abstandseinstellung des Linsensystems gegenüber dem optischen Aufzeichnungsträger zur Fokussierung auf eine Informationsspur auf demselben und andererseits eine Schwenkbewegung in Richtung quer zur betreffenden Informationsspur zur Einstellung auf deren Spurmitte. Diese bedeutet, dass der Träger 31 so anzuordnen ist, dass er einerseits eine Verstellbewegung in Richtung der Achse 28 der Spulenanordnung 27 und andererseits eine Drehbewegung um die Achse 28 der Spulenanordnung 27 ausführen kann. Um dies zu erreichen, ist für den Träger 31 ein Heiter 38 vorgesehen, der zwei in axialer Richtung der Spulenanordnung 27 gesehen übereinander liegende Basisteile 39 und 40 aufweist, in welchen durchgehende Bohrungen 41 und 42 vorgesehen sind, die korrespondierend zu zwei Stiften 43 und 44 liegen, die ihrerseits auf einem vom Steg 23 des U-förmigen Bügels 16 auskragenden Ansatz 45 angeordnet sind und auf die die Basisteile 39 und 40 gemeinsam aufsteckbar sind. Von jedem der Basisteile 39 und 40 kragt ein quer zur Achse 28 der Spulenanordnung 27 verlaufender Arm 46 beziehungsweise 47 aus, der über mindestens ein streifenförmiges Filmscharnier 48 beziehungsweise 49, im vorliegenden Fall sind je zwei solcher Filmscharniere vorgesehen, schwenkbar mit dem betreffenden Basisteil 39 beziehungsweise 40 verbunden ist. Die auskragenden Enden der Arme 46 und 47 sind ihrerseits über einen parallel zur Achse 28 der Spulenanordnung 27 verlaufenden Steg 50 miteinander verbunden, dies wieder über mindestens ein streifenförmiges Filmscharnier 51 beziehungsweise 52, wobei im vorliegenden Fall auch hier wieder je zwei solcher Filmscharniere vorgesehen sind. Auf diese Weise wird für den Steg 50 eine Führung nach der Art einer Schwingbrücke erhalten, durch die der Steg 50 in Richtung der Achse 28 der Spulenanordnung 27 verstellbar ist. Weiters ist mit dem Steg 50 über mindestens ein streifenförmiges Filmscharnier 53, im vorliegenden Fall sind wieder zwei solcher Filmscharniere vorgesehen, ein parallel zum Steg 50 und der Achse 28 der Spulenanordnung 27 verlaufender, hier zylindrisch ausgebildeter Tragzapfen 54 verbunden, wobei im montierten Zustand des optischen Abtasters die Achse 28 der Spulenanordnung 27 durch das Filmscharnier 53 beziehungsweise hier die beiden Filmscharniere 53 hindurchgeht. Auf diese Weise ist der Tragzapfen 54 um die Achse 28 der Spulenanordnung 27 verschwenkbar, wobei seine eigene Achse 55 mit Abstand parallel zur Achse 28 der Spulenanordnung 27 verläuft. Insgesamt gesehen ist somit der Tragzapfen 54 einerseits zusammen mit dem Steg 50 in Richtung der Achse 28 der Spulenanordnung 27 verstellbar und andererseits für sich alleine um die Achse 28 der Spulenanordnung 27 verschwenkbar und damit in der Lage, die für den verstellbaren Träger 31 erforderlichen Bewegungen auszufhren. Zur Verbindung des Halters 38 mit dem Träger 31 ist am Träger 31 ein hülsenförmiger Ansatz 56 vorgesehen, der eine durch strichlierte Linien angedeutete axiale Bohrung 57 aufweist, in die ein umfangsseitiger Schlitz 58 mündet. In diese Bohrung 57 ist der Tragzapfen 54 passend hineinsteckbar, wobei dann die beiden Filmscharniere 53 innerhalb des Schlitzes 58 zu liegen kommen. Beispielsweise durch am Tragzapfen 54 vorgesehene seitliche Rippen 59 und 60 und korrespondierende Rinnen 61 und 62 im Bereich der Bohrung 57 im Ansatz 56 des Trägers 31 kann dabei ein Verdrehungsschutz bewirkt werden.

Die Montage des optischen Abtasters erfolgt im wesentlichen in der Weise, dass vorerst der Tragzapfen 54 des Halters 38 in die im Ansatz 56 des Trägers 31 vorgesehene Bohrung 57 gesteckt und damit der Halter 38 mit dem Träger 54 verbunden wird. Hierauf wird der Basisteil 39 des Halters 38 vom Basisteil 40 weggeklappt und die Spulenanordnung 27 über den Basisteil 39 und den Arm 46 über den Steg 50 und den Tragzapfen 54 darüber geschoben. Danach werden die Stifte 33 der Spulenanordnung 27 in die korrespondierenden Bohrungen am Träger 31 engesetzt und mit Ultraschall mit dem Träger 31 verschweisst. Auf diese Weise bilden nunmehr der die Linse 32 tragende Träger 31, die Spulenanordnung 27 und der Halter 38 eine Baueinheit. Daran anschliessend wird der Basisteil 39 des Halters 38 wieder zum Basisteil 40 hingeklappt und dann die Basisteile 39 und 40 gemeinsam auf die Stifte 43 und 44 aufgesetzt, wodurch die Spulenanordnung 27 richtig im Luftspalt des durch die Magnete 17 und 18 gebildeten Magnetsystems zu liegen kommt. Durch Zuführung elektrischer Steuersignale einerseits zur Zylinderspule 1 und anderersiets zi den weiteren Spulen 4 der Spulenanordnung 27 ist damit der die Linse 32 tragende Träger 31 einerseits in Richtung der Achse 28 der Spulenanordnung 27 verstellbar und andererseits um die Achse 28 der Spulenanordnung 27 verdrehbar, wodurch die Linse 29 sowohl abstandsmässig auf eine Informationsspur auf einem Aufzeichnungsträgern fokussierbar als auch auf deren Spurmitte hin verschwenkbar ist.

Selbstverständlich ich könnten optische Abtaster, die eine Spulenanordnung der hier in Rede stehenden Art verwenden, insbesondere hinsichtlich ihres Funktionsprinzipes auch noch anders aufgebaut sein, beispielsweise dahingehend, dass sie mit einer stillstehenden Spulenanordnung und einem bewegten Magnetsystem arbeiten.

## Patentansprüche

1. Spulenanordnung für einen optischen Abtaster, die eine trägerlos gewickelte erste Spule aufweist, an der umfangsseitig mindestens eine weitere Spule angebracht ist, deren Achse dabei im wesentlichen senkrecht zum Umfang der ersten Spule verläuft, dadurch gekennzeichnet, dass die trägerlos gewickelte erste Spule umfangsseitig mit einem Kunststoffmantel umspritzt ist und dass im Kunststoffmantel, gegenüber der ersten Spule aussen liegend, mindestens eine mindestens abschnittsweise in ihrem Querschnitt rinnenförmig ausgebildete Spulenkammer ausgeformt ist, in der die weitere Spule untergebracht ist.

2. Spulenanordnung nach Anspruch 1, dadurch gekennzeichnet, dass die erste Spule als Zylinderspule und die weitere Spule als Sattelspule ausgebildet ist.

3. Spulenanordnung nach Anspruch 2, dadurch gekennzeichnet, dass die Spulenkammer für die als Sattelspule ausgebildete weitere Spule zwei parallel zur Achse der als Zylinderspule ausgebildeten ersten Spule verlaufende gerade rinnenförmige Abschnitte aufweist, die durch in Ihrem Querschnitt sekantenförmig zur Zylinderspule verlaufende Rinnen gebildet sind.

4. Optischer Abtaster zur Abtastung einer Informationsspur auf einem optischen Aufzeichnungsträger, versehen mit einer Spulenanordnung nach einem der vorhergehenden Ansprüche.

## Claims

1. A coil arrangement for an optical scanner, which arrangement comprises a self-supporting first coil carrying at its circumference at least one further coil whose axis extends substantially perpendicularly to the circumference of the first coil, characterised in that a plastics jacket is moulded around the self-supporting first coil at its circumference, and in that the plastics jacket is formed with at least one coil chamber which is disposed externally of the first coil and which is at least partly channel-shaped in cross-section, which chamber accommodates the further coil.

2. A coil arrangement as claimed in Claim 1, characterised in that the first coil is constructed as a cylindrical coil and the further coil as a saddle coil.

3. A coil arrangement according to Claim 2, characterised in that the coil chamber for the further coil, which is constructed as a saddle coil, has two straight channel-shaped sections which extend parallel to the axis of the first coil, which is constructed as a cylindrical coil, which sections are formed by channels of secant-shaped cross-section relative to the cylindrical coil.

4. An optical scanner for scanning an information track on an optical record carrier, which scanner comprises a coil arrangement as claimed in any one of the preceding Claims.

## Revendications

1. Disposition de bobine pour un dispositif de balayage optique présentant une première bobine enroulée sans support, à la circonférence de laquelle est disposée au moins une autre bobine, dont l'axe s'étend essentiellement perpendiculairement à la circonférence de la première bobine, caractérisée en ce que la première bobine enroulée sans support est recouverte, à sa circonférence, par projection d'une enveloppe en matière synthétique et en ce que dans l'enveloppe en matière synthétique est formée de façon à être située à l'extérieur par rapport à la première bobine, au moins une chambre de bobine dont la section transversale est au moins partiellement en forme de rainure et dans laquelle est logée l'autre bobine.

2. Disposition de bobine selon la revendication 1, caractérisée en ce que la première bobine est sous forme d'une bobine cylindrique et l'autre bobine est sous forme d'une bobine à selle.

3. Disposition de bobine selon la revendication 2, caractérisée en ce que pour l'autre bobine réalisée en forme de bobine à selle, la chambre de bobine présente deux parties en forme de rainure droite s'étendant parallèlement à l'axe de la première bobine réalisée sous forme de bobine cylindrique et formée par des rainures dont la section transversale s'étend en forme de sécante par rapport à la bobine cylindrique.

4. Dispositif de balayage optique pour le balayage d'une piste d'information sur un porteur d'enregistrement optique muni d'une disposition de bobine selon l'une des revendications précédentes.
